# EUROPEAN PATENT SPECIFICATION

(11) **EP 0 888 668 B1**
(45) Date of publication and mention of the grant of the patent: **18.09.2002**
(21) Application number: 97906958.0
(22) Date of filing: 18.03.1997
(51) Int. Cl.: H02M 7/5387

(54) **ELECTRICAL INVERTER WITH A SILICON CONTROLLED RECTIFIER FULL-BRIDGE CIRCUIT**
ELEKTRISCHER WECHSELRICHTER MIT EINER SILIZIUMTHYRISTOR-VOLLBRUCKENSCHALTUNG
ONDULEUR A CIRCUIT A REDRESSEURS COMMANDES AU SILICIUM EN PONT COMPLET

(30) Priority: 21.03.1996 CN 96204510
(43) Date of publication of application: 07.01.1999
(73) Proprietor: Amsdell, Inc., Richmond Hill, Ontario L4B 1J4 (CA)
(72) Inventor: WU, Fu, Ning Building No. 813, Beijing 100080 (CN)
(74) Representative: Hamilton, Alistair
(86) International application number: CA9700185
(87) International publication number: WO97035379

(56) References cited:
- FR-A- 2 701 339
- US-A- 4 047 081
- US-A- 4 204 265

## Description

### FIELD OF THE INVENTION

The present invention relates to an inverter circuit for converting a DC voltage into an AC voltage.

### BACKGROUND OF THE INVENTION

Conventional invertor circuits typically employ push-pull circuitry to alternately drive the two primary windings of a transformer and generate an alternating positive/negative or AC signal at the secondary windings of the transformer. This type of inverter is widely used in small and medium uninterruptible power supply (UPS) systems (i.e. below 1 kilo-voltamperes), as well as in other equipment which converts DC voltage to AC voltage. Although such invertors are simple and reliable, many require low frequency (10-100 Hz) iron core transformers which are large, heavy, and expensive. As a result, these inverters are unsuitable for use in personal computers, fax machines and small UPS systems, and there is therefore a need for a novel invertor circuit which operates in a reliable and stable manner but does not require an iron core transformer.

FR-A-2,701,339 discloses a circuit comprising the features of the preamble of claim 1.

### SUMMARY OF THE INVENTION

The invention is defined by the features of claims 1. Preferred embodiments are defined in the dependent claims.

### BRIEF DESCRIPTION OF THE DRAWINGS

In the accompanying drawings which illustrate preferred embodiments of the invention:
Fig. 1 shows the inverter circuit in accordance with a preferred embodiment of the present invention.
Fig. 2 shows one of the Pulse Control Circuits of Fig. 1.
Fig. 3 shows the other of the Pulse Control Circuits of Fig. 1.
Fig. 4 shows a possible Time Sequencing Circuit for the inverter of Fig. 1.
Fig. 5 is a timing diagram for the circuit of Fig. 4.
Fig. 6 illustrates an alternate embodiment of the inverter of the present invention.

### DETAILED DESCRIPTION OF THE INVENTION

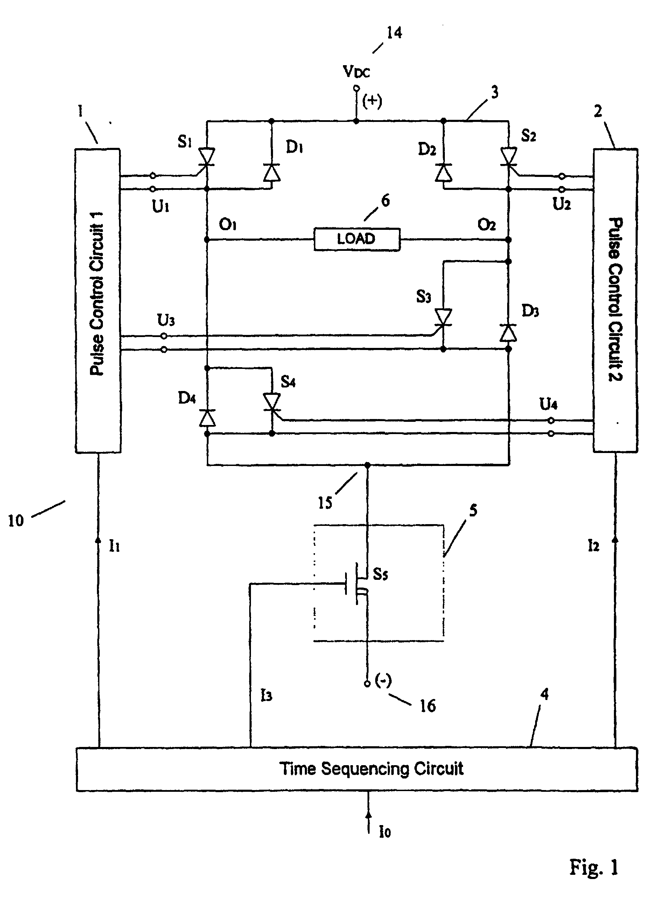

Fig. 1 shows an invertor 10 in accordance with a preferred embodiment of the present invention. Invertor 10 comprises a full-bridge circuit 3 having a plurality (i.e. four) silicon controlled rectifier switches, or SCRs, S1, S2, S3, and S4, two pulse control circuits labelled 1 and 2 respectively, a time sequencing circuit 4, and a power switch circuit 5. The full bridge circuit 3 is connected directly to a positive DC input terminal 14 and is coupled through the power switch circuit 5 to a negative DC input terminal 16. Referring to Fig. 1, rectifiers S1 and S4 are positively connected in series between the DC input 14 and node 15, so that the anode of S1 is coupled to the positive DC input 14 and the cathode of S4 is connected to node 15 and is thereby coupled, through power switch circuit 5, to the negative DC input 16. As shown in Fig. 1, rectifiers S2 and S3 are similarly connected and are in parallel with the series connection of S1 and S4. The AC output voltage of the invertor is generated between terminals O1 and O2. As shown in Fig. 1, an AC load 6 is coupled between the terminals O1 and O2. Output terminal O1 is coupled to the cathode of S1 and the anode of S4, and output terminal O2 is coupled to the cathode of S2 and the anode of S3. Diode D1 is connected in parallel with S1 so that the cathode of D1 is connected to the anode of S1 and the anode of D1 is connected to the cathode of S1. Diodes D2, D3, and D4 are similarly connected in parallel across rectifiers S2, S3, and S4 respectively, as shown in Fig. 1.

The gate and cathode of SCRs S1 and S3 are connected to differential control voltage signals U1 and U3 which are generated by Pulse Control Circuit 1. Similarly, the gate and cathode of SCRs S2 and S4 are connected to differential control voltage signals U2 and U4 which are generated by Pulse Control Circuit 2.

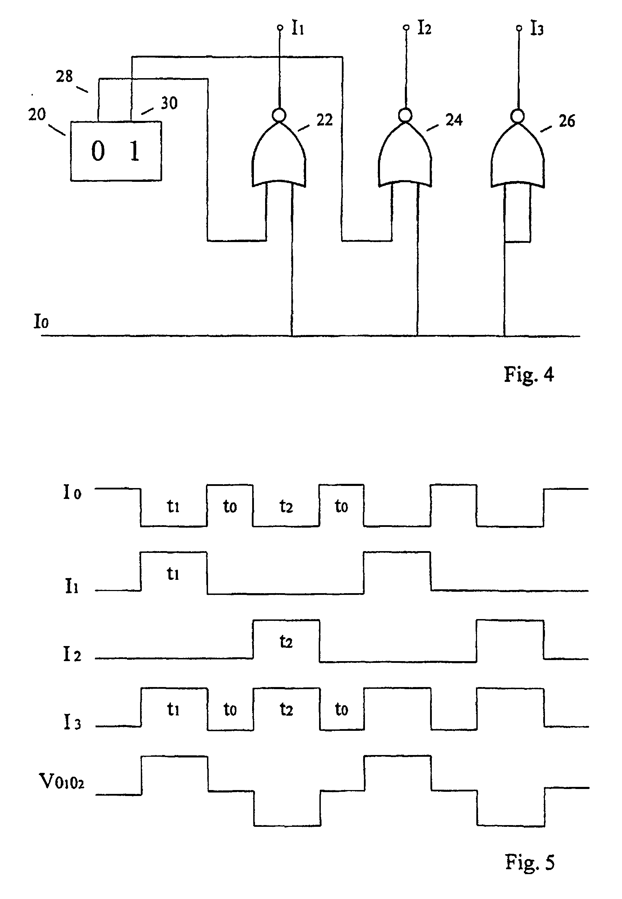

Time Sequencing Circuit 4 outputs three time-sequencing pulse signals: I1, a first half-cycle time sequencing pulse which is the input to Pulse Control Circuit 1; I2, a second half-cycle time sequencing pulse which is the input to Pulse Control Circuit 2; and I3, an intermittent break-off time sequencing pulse which pulses low between the first and second half-cycles and is the input to power switch circuit 5. (See also Fig. 5 which will be described shortly and which shows the waveforms for the signals I1, I2, and I3.)

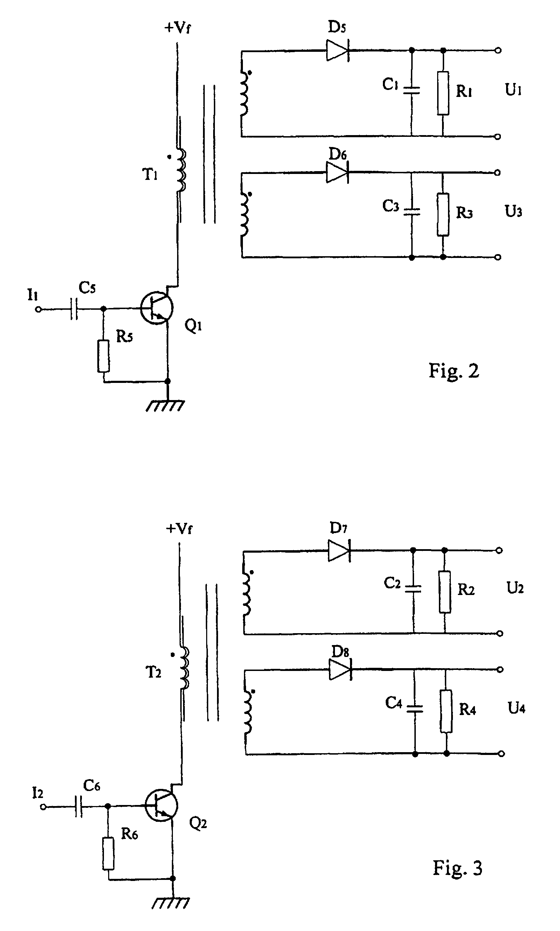

Preferred embodiments of the Pulse Control Circuits 1 and 2 are shown in Figs. 2 and 3 respectively. Pulse Control Circuit 1 has two pairs of mutually isolated terminals to output the control pulse signals U1 and U3, and Pulse Control Circuit 2 has two pairs of mutually isolated terminals to output the control pulse signals U2 and U4.

Referring to Fig. 2, pulse transformer T1 has one primary winding and two secondary windings, with the polarity marked terminal of the primary winding connected to a reference voltage +Vf and the other terminal of the primary winding connected to the collector of transistor Q1. Note that transformer T1 need not comprise an iron core transformer. The emitter of transistor Q1 is connected to ground as is one terminal of resistor R5. The base of Q1 is connected to the other terminal of resistor R5 and to one terminal of capacitor C5. The other terminal of capacitor C5 is coupled to the input timing sequence pulse signal I1. Diode D5 is connected in series with the first secondary winding of transformer t1, and capacitor C1 and resistor R1 are each connected across the first secondary winding of transformer T1 in the manner shown in Fig. 2. Diode D6, capacitor C3, and resistor R3 are similarly connected to the second secondary winding of transformer T1. Control pulse signal U1 is output across the terminals of C1 and R1, and control pulse signal U3 is output across the terminals of C3 and R3.

The description of the configuration of Pulse Control Circuit 2 is the same as the above description for Pulse Control Circuit 1, with components C5, R5, Q1, T1, D5, C1, R1, D6, C3, and R3 correspondingly replaced by C6, R6, Q2, T2, D7, C2, R2, D8, C4, and R4 respectively.

As shown in Fig. 1, power switch circuit 5 may comprise one power field effect transistor S5, wherein the grid or gate of S5 receives the time sequencing pulse signal I3 and thereby controls whether the channel between the source and the drain of S5, i.e. the control path, is conducting.

Fig. 4 illustrates a possible embodiment for the Time Sequencing Circuit 4 and how time sequencing pulses I1, I2, and I3 may be generated from the signal I0 which acts as an input to the Time Sequencing Circuit 4. In an alternative embodiment, the signals I1, I2, and I3 may be generated by a programmable microprocessor or a pulse current supply (not shown) as will be clear to those skilled in the art. Referring to Fig. 4, Circuit 20 generates complementary high/low signals 28 and 30 which are inverted (by conventional means not shown) every half cycle of I0. Circuit 20 may comprise a flip flop triggered by I0, or alternatively signals 28 and 30 may be generated by a programmable microprocessor. One of the signals, signal 28, from circuit 20 and the signal I0 are inputs to NOR gate 22 which outputs I1, and the other signal 30 from circuit 20 and the signal I0 are inputs to NOR gate 24 which outputs I2. As a result, signal I1 pulses high during the first half cycle of I0, i.e the time period of t1 + t0, and signal I2 pulse high during the second half cycle of I0, i.e the time period of t2 + t0 (note that t2 = t1), so that signal I1 and signal I2 are in phase opposition (i.e. they are 180 degrees out of phase with each other) as shown in the timing diagram of Fig. 5. Referring to Fig. 4, NOR gate 26 acts as a digital inverter which inverts the input I0 to produce pulse signal I3.

In operation, during the onset of the first half cycle of I0 power transistor S5 is turned on by the rising edge of I3, and transistor Q1 is turned on by the rising edge of I1 and conducts until the voltage at the base of Q1 discharges, at a rate determined by R5 and C5, below the base-emitter threshold voltage. During the short time that Q1 is conducting, pulses are produced on each of the secondary windings of transformer T1 which charge C1 and C3 respectively through D5 and D6 respectively to a certain voltage. When U1 and U3 reach the trigger voltage necessary to turn S1 and S3 on, the output voltage across O1 and O2 becomes positive as shown for VO1O2 in Fig. 5. At the end of period t1, power transistor S5 shuts off and effectively cuts off the entire circuit, while diodes D5 and D6 reversibly isolate the bridge circuit from any back swing of transformer T1. Once cut off, the current flowing through rectifiers S1 and S3 rapidly decreases to a value below the minimum current necessary to maintain the SCRs in a conducting state, i.e. the holding current. Once S1 and S3 switch off, the output voltage across O1 and O2 goes to zero and remains at that value until the first half cycle of I0 ends. Note that to prevent S1 and S3 from possible damage, diodes D1 and D3 form a discharge loop in case an inductive load gives rise to an inductive current during cut off of the circuit.

The load 6 has a high impedance which maintains a stable current when either of the switching device pairs S1-S3 or S2-S4 are conducting. This current through the load is greater than the holding current, which is the minimum current required to maintain the conducting SCRs in a conducting state after they have been turned on.

During the second half cycle of I0, power transistor S5 repeats the same turn on and cut off operation as just described for the first cycle, except in this case I2, and not I1, pulses high when I3 goes high. Control pulses U2 and U4 eventually reach a level which turns on rectifiers S2 and S4 (while S1 and S3 remain cut off). This causes the output voltage across O1 and O2 to become negative as shown for VO1O2 in Fig. 5, before it returns to zero when S2 and S4 turn off shortly after I2 and I3 go low. When I3 goes high again, so does I1, and the cycle repeats. As illustrated in Fig. 5, the output voltage, VO1O2, is a two step per half cycle AC voltage signal.

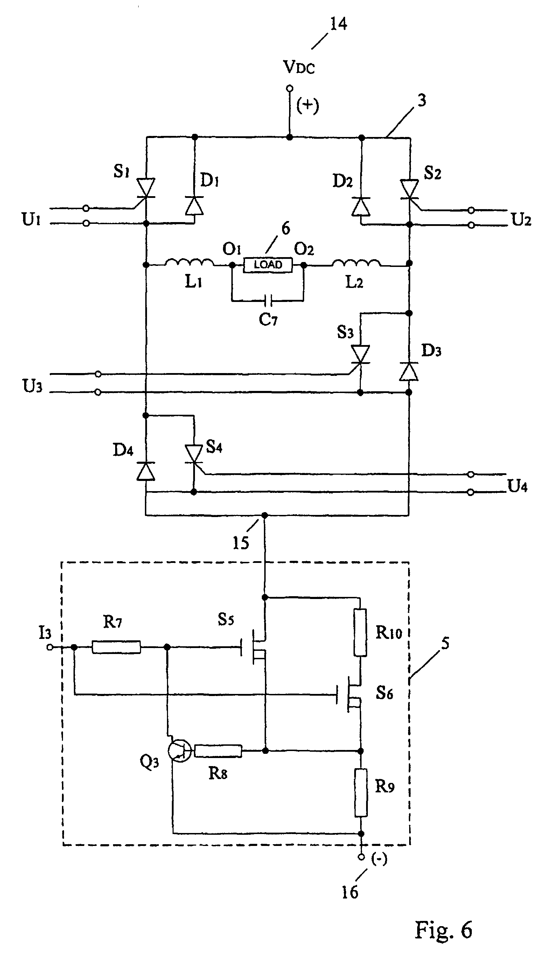

In one embodiment of the present invention which is illustrated in Fig. 6, a filter capacitor C7 is connected between output terminals O1 and O2 so that it is effectively in parallel with the load 6. The output terminals O1 and O2 are additionally coupled to the series connected terminals of S1 and S4 and the series connected terminals of S2 and S3 through inductor L1 and inductor L2 respectively. Inductors L1 and L2 and capacitor C7 thereby comprise a filter circuit which increases the duration of the rise and fall times of the output signal, thereby inhibiting high frequency components during the rising and falling edges of the output signal and consequently reducing interference with the load. In addition, inductors L1 and L2 also serve to dampen the load current so that the circuitry can be protected.

Also in Fig. 6, an alternate embodiment of the power switch circuit 5 is shown comprising the power field effect transistor S5, a second power field effect transistor S6, current limiting resistor R10, over current detecting resistor R9, gate or grid control resistor R7, gate or grid control transistor Q3, and resistor R8. Referring to Fig. 6, R10 is connected between the drain terminals of S5 and S6. The source of S6 is connected to a first terminal of R8 and a first terminal of R9, while the second terminal of R9 is connected to the negative DC voltage 16. The first terminal of R8 is also connected to the source of S5 (so that the source of S5 is connected to the source of S6) and the second terminal of R8 is connected to the base of Q3. The emitter of Q3 is connected to the negative DC voltage 16 and the collector of Q3 is connected to the gate of S5 and a first terminal of R7. The input I3 is coupled to the second terminal of R7 as well as directly to the gate of S6. In this manner, the combination of R10, S6, and R9 form a control loop or control path for the power switch circuit 5.

In operation, the rising edge of the input pulse signal I3 simultaneously turns on power transistors S5 and S6. Resistor R9 samples the magnitude of the load current, and when the load current reaches a certain threshold magnitude, the voltage drop across R9 turns transistor Q3 on, which lowers the gate potential of power transistor S5, and in turn quickly leads to S5 shutting off. With S5 cut off, the load current shifts to flow through power transistor S6, whereby it is limited by the value of resistor R10. The above described current limiting approach, which does not entirely cut off the current loop, ensures that maximum power can be outputted while still maintaining safe operation of the circuitry.

The above approach is particularly advantageous in the case of a large capacitive load (i.e. approximately 200-400 micro-Farads), such as with a rectifying circuit comprising a large capacitor and a rectifying diode. At the rising edge of the output signal, a large load capacitance effectively acts as a shorted load as it begins to charge. The current limiting function of the power switch circuitry protects the load while the load capacitor charges with the maximum output current that ensures safety and protection. Once the load capacitance has charged to the operating potential, the load current becomes too small to maintain the current sampling voltage across R9 at a value great enough to keep Q3 on. As a result, power transistor S5 turns on. With S5 on, the power consumption or dissipation in the invertor circuit is principally due to the voltage drop across the conducting SCR pair (either S1- S3 or S2 - S4) and the voltage drop across S5, thus providing a high power efficiency. At the falling edge of I3, transistors S5 and S6 are cut off, and the inductive load current (from L1 and L2) continues to flow towards S5 so that the drain voltage of S5 rises. Diodes D1, D2, D3, and D4 provide a discharge loop for this current so that the SCR switches are protected, and energy is returned to positive DC voltage 14.

The inverter circuit according to the present invention does not comprise an iron core transformer and is capable of being designed so that it's size and weight are compatible for use in small type UPS systems. In addition, the power switch circuit 5 acts to protect the entire system and enables safe and reliable inverter operation. While preferred embodiments of the present invention have been described, the embodiments disclosed are illustrative and not restrictive, and the scope of the invention is intended to be defined only by the appended claims.

## Claims

1. An inverter circuit (10) for converting a DC voltage between a first DC input (14) and a second DC input (16) into an AC voltage having first and second half cycles of opposite polarity across a load (6), said load (6) being coupled between a first output terminal (01) and a second output terminal (O2), said inverter circuit comprising
(a) a bridge circuit (3) comprising a plurality of silicon controlled rectifier switches (S1, S2, S3, S4) arranged in a bridge configuration, said bridge circuit being coupled between said first DC input (14) and a first node (15), said bridge circuit further being coupled to said first output terminal (O1) and said second output terminal (O2);
(b) a first pulse control circuit (1) responsive to a first pulse signal (I1) and coupled to said bridge circuit (3) for turning on a first portion (S1, S3) of said bridge circuit (3);
(c) a second pulse control circuit (2) responsive to a second pulse signal (I2) and coupled to said bridge circuit (3) for turning on a second portion (S2, S4) of said bridge circuit (3); and
(d) a timing circuit (4) coupled to said first and second pulse control circuits (1, 2) for generating a first pulse signal for controlling said first pulse control circuit (1) and a second pulse signal for controlling said second pulse control circuit (2), said first pulse signal and said second pulse signal being in phase opposition,
**characterized in that**:
(e) the inverter circuit further comprises a power switch transistor circuit (5) responsive to an intermittent cycle pulse signal (I3) for connecting said first node (15) to said second DC input (16); and
(f) said timing circuit (4) is further coupled to said power switch transistor circuit (5) and generates an intermittent cycle pulse signal for turning said power switch transistor circuit (5) off during periods between a pulse of said first pulse signal and a pulse of said second pulse signal.

2. An inverter according to claim 1 **characterized in that** said bridge circuit (3) comprises first, second, third, and fourth silicon controlled rectifier switches (S1, S2, S3, S4), said first silicon controlled rectifier switch (S1) being coupled between said first DC input (14) and said first output terminal (O1), said second silicon controlled rectifier switch being coupled between said first DC input (14) and said second output terminal (O2), said third silicon controlled rectifier switch being coupled between said first node (15) and said second output terminal (O2), and said fourth silicon controlled rectifier switch (S4) being coupled between said first node (15) and said first output terminal (O1).

3. An inverter according to claim 2 **characterized in that** said first portion of said bridge circuit comprises said first silicon controlled rectifier switch (S1) and said third silicon controlled rectifier switch (S3), and said second portion of said bridge (3) comprises said second silicon controlled rectifier switch (S2) and said fourth silicon controlled rectifier switch (S4).

4. An inverter according to claim 3 **characterized in that** the anode of said first silicon controlled rectifier switch (S1) and the anode of said second silicon controlled rectifier switch are each connected to said first DC input (14), the anode of said third silicon controlled rectifier switch is connected to said second output terminal (O2), and the anode of said fourth silicon controlled rectifier switch is connected to said first output terminal (O1).

5. An inverter according to claim 3 or 4 **characterized in that** each of said first, second, third, and fourth silicon controlled rectifier switches (S1, S2, S3, S4) is connected in parallel with a diode (D1, D2, D3, D4), such that the anode of the diode is connected to the cathode of the silicon controlled rectifier and the cathode of the diode is connected to the anode of the silicon controlled rectifier.

6. An inverter according to claim 3, **characterized in that** said first output terminal (O1) is coupled to said first silicon controlled rectifier switch (S1) and to said fourth silicon controlled rectifier switch (S4) through a first inductor (L1) and said second output terminal (O2) is coupled to said second silicon controlled rectifier switch (S2) and to said third silicon controlled rectifier switch (S3) through a second inductor (L2).

7. An inverter according to claim 6, **characterized in that** a capacitor (C7) is coupled between said first output terminal (O1) and said second output terminal (O2).

8. An inverter according to claim 3, **characterized in that** each of said first pulse control circuit (1) and said second pulse control circuit (2) comprises a transformer (T1, T2) having one primary winding with first and second terminals, a first secondary winding with first and second terminals, and a second secondary winding with first and second terminals, such that:
the first terminal of said primary winding is connected to a first reference signal, the second terminal of said primary winding is coupled through a switching circuit (Q1, C5, R5, Q2, C6, R6) to a second reference signal, said switching circuit being responsive to a pulse signal (I1, I2) for generating a pulse of a first polarity across said primary winding;
the first terminal of said first secondary winding is connected through a first diode (D5, D7) to a first terminal of a first capacitor (C1, C2) and a first terminal of a first resistor (R1, R2) and the second terminal of said first secondary winding is connected to a second terminal of said first capacitor (C1, C2) and a second terminal of said first resistor (R1, R2), so that an output pulse (U1, U2) is generated between the first terminal and the second terminal of said first resistor (R1, R2) in response to said pulse across said primary winding; and
the first terminal of said second secondary winding is connected through a second diode (D6, D8) to a first terminal of a second capacitor (C3, C4) and a first terminal of a second resistor (R3, R4) and the second terminal of said second secondary winding is connected to a second terminal of said second capacitor (C3, C4) and a second terminal of said second resistor (R3, R4), so that an output pulse (U3, U4) is generated between the first terminal and the second terminal of said second resistor (R3, R4) in response to said pulse across said primary winding.

9. An inverter according to claim 8, **characterized in that** said first diode (D5, D7) and said second diode (D6, D8) are configured to isolate said first secondary winding from said first capacitor (C1, C2) and from said first resistor (R1, R2) and to isolate said second secondary winding from said second capacitor (C3, C4) and from said second resistor (R3, R4) when said pulse across said primary winding is not of said first polarity.

10. An inverter according to claim 3, **characterized in that** said power switch circuit (5) comprises a power transistor (S5), the drain of said power transistor (S5) being connected to said bridge circuit (3), the source of said power transistor (S5) being connected to said second DC input (16), and the gate of said transistor (S5) being coupled to said intermittent cycle pulse signal (I3).

11. An inverter according to claim 3, **characterized in that** said power switch circuit (5) comprises:
(a) a first power transistor (S5), the drain of said first power transistor (S5) being connected to said bridge circuit (3), and the gate of said first power transistor (55) being coupled through a first resistor (R7) to said intermittent cycle pulse signal (I3);
(b) a second power transistor (S6), the gate of said second power transistor (S6) being coupled to said intermittent cycle pulse signal (I3) and the source of said second power transistor (S6) being coupled to the source of said first power transistor (S5);
(c) a third transistor (Q3);
(d) a second resistor (R8) coupled between the source of said first power transistor (S5) and the base of said third transistor (Q3);
(e) a third resistor (R9) coupled between the source of said second power transistor (S6) and the second DC input (16) for detecting the magnitude of the current between said first output terminal (O1) and said second output terminal (O2); and
(f) a fourth resistor (R10) coupled between the drain of said first power transistor (S5) and the drain of said second power transistor (S6) for limiting the magnitude of said current between said first output terminal (O1) and said second output terminal (O2) when said magnitude exceeds a threshold value.

12. An inverter according to claim 10 or 11, **characterized in that** said second DC input (16) is at a lower voltage level than said first DC input (14).

## Patentansprüche

1. Inverterschaltung (10) zum Umwandeln einer Gleichspannung zwischen einem ersten Gleichspannungseingang (14) und einem zweiten Gleichspannungseingang (16) in eine erste Wechselspannung mit einem ersten und einem zweiten Halbzyklus mit entgegengesetzter Polarität über eine Last (6), wobei die Last (6) zwischen einem ersten Ausgangsanschluss (O1) und einen zweiten Ausgangsanschluss(O2) angeschlossen ist, wobei die Inverterschaltung umfasst:
(a) eine Brückenschaltung (3), die eine Vielzahl von Thyristorschaltern (S1, S2, S3) umfasst, die in einer Brückenkonfiguration angeordnet sind, wobei die Brückenschaltung zwischen den ersten Gleichspannungseingang (14) und einen ersten Knotenpunkt (15) gekoppelt ist, wobei die Brückenschaltung weiters an den ersten Ausgangsanschluss (O1) und den zweiten Ausgangsanschluss (O2) gekoppelt ist;
(b) eine erste Impulssteuerschaltung (1), die auf ein erstes Impulssignal (I1) anspricht und an die Brückenschaltung (3) gekoppelt ist, um einen ersten Abschnitt (S1, S3) der Brückenschaltung (3) einzuschalten;
(c) eine zweite Impulssteuerschaltung (2), die auf ein zweites Impulssignal (I2) anspricht und an die Brückenschaltung (3) gekoppelt ist, um einen zweiten Abschnitt (S2, S4) der Brückenschaltung (3) einzuschalten; sowie
(d) einen Zeitgeber (4), der an die erste und die zweite Impulssteuerschaltung (1, 2) gekoppelt ist, um ein erstes Impulssignal zur Steuerung der ersten Impulssteuerschaltung (1) und ein zweites Impulssignal zur Steuerung der zweiten Impulssteuerschaltung (2) zu erzeugen, wobei das erste Impulssignal und das zweite Impulssignal entgegengesetzte Phasen aufweisen,
**dadurch gekennzeichnet, dass**
(e) die Inverterschaltung weiters eine Leistungsschalter(A)-Schaltung (5) umfasst, die auf ein Impulssignal (I3) mit intermittierendem Zyklus anspricht, um den ersten Knotenpunkt (15) mit dem zweiten Gleichspannungseingang (16) zu verbinden; und
(f) der Zeitgeber (4) weiters an die Leistungsschalter(A)-Schaltung (5) gekoppelt ist und ein Impulssignal mit intermittierendem Zyklus erzeugt, um die Leistungsschalter(A)-Schaltung (5) während Perioden zwischen einem Impuls des ersten Impulssignals und einem Impuls des zweiten Impulssignals abzuschalten.

2. Inverter nach Anspruch 1, **dadurch gekennzeichnet, dass** die Brückenschaltung (3) einen ersten, einen zweiten, einen dritten und einen vierten Thyristorschalter (S1, S2, S3, S4) umfasst, wobei der erste Thyristorschalter (S1) zwischen den ersten Gleichspannungseingang (14) und den ersten Ausgangsanschluss (O1) geschaltet ist, der zweite Thyristorschalter zwischen den ersten Gleichspannungseingang (14) und den zweiten Ausgangsanschluss (O2) geschaltet ist, der dritte Thyristorschalter zwischen den ersten Knotenpunkt (15) und den zweiten Ausgangsanschluss (O2) geschaltet ist und der vierte Thyristorschalter (S4) zwischen den ersten Knotenpunkt (15) und den ersten Ausgangsanschluss(O1) geschaltet ist.

3. Inverter nach Anspruch 2, **dadurch gekennzeichnet, dass** der erste Abschnitt der Brückenschaltung den ersten Thyristorschalter (S1) und den dritten Thyristorschalter (S3) umfasst, und der zweite Abschnitt der Brücke (3) den ersten Thyristorschalter (S2) und den vierten Thyristorschalter (S4) umfasst.

4. Inverter nach Anspruch 3, **dadurch gekennzeichnet, dass** die Anode des ersten Thyristorschalters (S1) und die Anode des zweiten Thyristorschalters jeweils an den ersten Gleichspannungseingang (14) angeschlossen sind, die Anode des dritten Thyristorschalters an den zweiten Ausgangsanschluss (O2) angeschlossen ist und die Anode des vierten Thyristorschalters an den ersten Ausgangsanschluss (O1) angeschlossen ist.

5. Inverter nach Anspruch 3 oder 4, **dadurch gekennzeichnet, dass** zu jedem aus dem ersten, dem zweiten, dem dritten und dem vierten Thyristorschalter (S1, S2, S3, S4) eine Diode (D1, D2, D3, D4) parallel geschaltet ist, so dass die Anode der Diode an die Kathode des Thyristors angeschlossen ist und die Kathode der Diode an die Anode des Thyristors angeschlossen ist.

6. Inverter nach Anspruch 3, **dadurch gekennzeichnet, dass** der erste Ausgangsanschluss (O1) durch eine erste Spule (L1) an den ersten Thyristorschalter (S1) und an den vierten Thyristorschalter (S4) gekoppelt ist und der zweite Ausgangsanschluss(O2) durch eine zweite Spule (L2) an den zweiten Thyristorschalter (S2) und an den dritten Thyristorschalter (S3) gekoppelt ist.

7. Inverter nach Anspruch 6, **dadurch gekennzeichnet, dass** ein Kondensator (C7) zwischen den ersten Ausgangsanschluss (O1) und den zweiten Ausgangsanschluss (02) geschaltet ist.

8. Inverter nach Anspruch 3, **dadurch gekennzeichnet, dass** jede aus der ersten Impulssteuerschaltung (1) und der zweiten Impulssteuerschaltung (2) einen Transformator (T1, T2) umfasst, der eine Primärwicklung mit einem ersten und einem zweiten Anschluss, eine erste Sekundärwicklung mit einem ersten und einem zweiten Anschluss, sowie eine zweite Sekundärwicklung mit einem ersten und einem zweiten Anschluss aufweist, so dass:
der erste Anschluss der Primärwicklung an ein erstes Bezugssignal angeschlossen ist, der zweite Anschluss der Primärwicklung durch eine Umschaltschaltung (Q1, C5, R5, Q2, C6, R6) an ein zweites Bezugssignal angeschlossen ist, wobei die Umschaltschaltung auf ein Impulssignal (I1, I2) anspricht, um einen Impuls einer ersten Polarität über die Primärwicklung zu erzeugen;
der erste Anschluss der ersten Sekundärwicklung durch eine erste Diode (D5, D7) an einen ersten Anschluss eines ersten Kondensators (C1, C2) und einen ersten Anschluss eines ersten Widerstands (R1, R2) angeschlossen ist, und der zweite Anschluss der ersten Sekundärwicklung an einen zweiten Anschluss des ersten Kondensators (C1, C2) und einen zweiten Anschluss des ersten Widerstands (R1, R2) angeschlossen ist, so dass zwischen dem ersten Anschluss und dem zweiten Anschluss des ersten Widerstands (R1, R2) als Reaktion auf den Impuls über die Primärwicklung ein Ausgangsimpuls (U1, U2) erzeugt wird; und
der erste Anschluss der zweiten Sekundärwicklung durch eine zweite Diode (D6, D8) an einen ersten Anschluss eines zweiten Kondensators (C3, C4) und einen ersten Anschluss eines zweiten Widerstands (R3, R4) angeschlossen ist und der zweite Anschluss des zweiten Sekundärwicklung an einen zweiten Anschluss des zweiten Kondensators (C3, C4) und einen zweiten Anschluss des zweiten Widerstands (R3, R4) angeschlossen ist, so dass als Reaktion auf den Impuls über die Primärwicklung ein Ausgangsimpuls (U3, U4) zwischen dem ersten Anschluss und dem zweiten Anschluss des zweiten Widerstands (R3, R4) erzeugt wird.

9. Inverter nach Anspruch 8, **dadurch gekennzeichnet, dass** die erste Diode (D5, D7) und die zweite Diode (D6, D8) so konfiguriert sind, dass die erste Sekundärwicklung vom ersten Kondensator (C1, C2) und vom ersten Widerstand (R1, R2) isoliert werden und die zweite Sekundärwicklung vom zweiten Kondensator (C3, C4) und vom zweiten Widerstand (R3, R4) isoliert werden, wenn der Impuls über die Primärwicklung nicht die erste Polarität aufweist.

10. Inverter nach Anspruch 3, **dadurch gekennzeichnet, dass** die Leistungsschalterschaltung (5) einen Leistungstransistor (S5) umfasst, wobei der Drain-Anschluss des Leistungstransistors (S5) an die Brückenschaltung (3) angeschlossen ist, der Source-Anschluss des Leistungstransistors (S5) an den zweiten Gleichspannungseingang (16) angeschlossen ist und das Gate des Transistors (S5) an das Impulssignal (I3) mit intermittierendem Zyklus gekoppelt ist.

11. Inverter nach Anspruch 3, **dadurch gekennzeichnet, dass** die Leistungsschalterschaltung (5) umfasst:
(a) einen ersten Leistungstransistor (S5), wobei der Drain-Anschluss des ersten Leistungstransistors (S5) an die Brückenschaltung (3) angeschlossen ist, und das Gate des ersten Leistungstransistors (S5) durch einen ersten Widerstand (R7) an das Impulssignal (I3) mit intermittierendem Zyklus angeschlossen ist;
(b) einen zweiten Leistungstransistor (S6), wobei das Gate des zweiten Leistungstransistors (S6) an das Impulssignal (I3) mit intermittierendem Zyklus gekoppelt ist und der Source-Anschluss des zweiten Leistungstransistors (S6) an den Source-Anschluss des ersten Leistungstransistors (S5) gekoppelt ist;
(c) einen dritten Transistor (Q3);
(d) einen zweiten Widerstand (R8), der zwischen den Source-Anschluss des ersten Leistungstransistors (S5) und die Basis des dritten Transistors (Q3) geschaltet ist;
(e) einen dritten Widerstand (R9), der zwischen den Source-Anschluss des zweiten Leistungstransistors (S6) und den zweiten Gleichspannungseingang (16) geschaltet ist, um die Amplitude des Stroms zwischen dem ersten Ausgangsanschluss(O1) und dem zweiten Ausgangsanschluss (O2) zu ermitteln; und
(f) einen vierten Widerstand (R10), der zwischen den Drain-Anschluss des ersten Leistungstransistors (S5) und den Drain-Anschluss des zweiten Leistungstransistors (S6) geschaltet ist, um die Amplitude des Stroms zwischen dem ersten Ausgangsanschluss (O1) und dem zweiten Ausgangsanschluss (O2) zu begrenzen, wenn die Amplitude einen Schwellenwert übersteigt.

12. Inverter nach Anspruch 10 oder 11, **dadurch gekennzeichnet, dass** der zweite Gleichspannungseingang (16) eine niedrigere Spannungshöhe aufweist als der erste Gleichspannungseingang (14).

## Revendications

1. Circuit onduleur (10) pour transformer une tension continue entre une première entrée de tension continue (14) et une seconde entrée de tension continue (16) en une tension alternative présentant des premier et second demi-cycles de polarité opposée sur une charge (6), ladite charge (6) étant couplée entre une première borne de sortie (O1) et une seconde borne de sortie (O2), ledit circuit onduleur comprenant :
(a) un montage en pont (3) comprenant une pluralité d'interrupteurs redresseurs commandés au silicium (S1, S2, S3, S4) agencés selon une configuration en pont, ledit montage en pont étant couplé entre ladite première entrée continue (14) et un premier noeud (15), ledit montage en pont étant couplé en outre à ladite première borne de sortie (O1) et ladite seconde borne de sortie (O2) ;
(b) un premier circuit de commande d'impulsions (1) réagissant à un premier signal d'impulsions (I1) et couplé audit montage en pont (3) pour mettre en service une première portion (S1, S3) dudit montage en pont (3) ;
(c) un second circuit de commande d'impulsions (2) réagissant à un second signal d'impulsions (I2) et couplé audit montage en pont (3) pour mettre en service une seconde portion (S2, S4) dudit montage en pont (3) ; et
(d) un circuit de cadencement (4) couplé auxdits premier et second circuits de commande d'impulsions (1, 2) pour générer un premier signal d'impulsions pour commander ledit premier circuit de commande d'impulsions (1) et un second signal d'impulsions pour commander ledit second circuit de commande d'impulsions (2), ledit premier signal d'impulsions et ledit second signal d'impulsions étant opposés en phase,
**caractérisé en ce que** :
(e) le circuit onduleur comprend en outre un circuit transistorisé de commutation de puissance (5) réagissant à un signal d'impulsions de cycle intermittent (I3) pour connecter ledit premier noeud (15) à ladite seconde entrée continue (16) ; et
(f) ledit circuit de cadencement (4) est couplé en outre audit circuit transistorisé de commutation de puissance (5) et génère un signal d'impulsions de cycle intermittent pour mettre hors service ledit circuit transistorisé de commutation de puissance (5) pendant des périodes entre une impulsion dudit premier signal d'impulsions et une impulsion dudit second signal d'impulsions.

2. Onduleur selon la revendication 1, **caractérisé en ce que** ledit montage en pont (3) comprend des premier, deuxième, troisième et quatrième interrupteurs redresseurs commandés au silicium (S1, S2, S3, S4), ledit premier interrupteur redresseur commandé au silicium (S1) étant couplé entre ladite première entrée continue (14) et ladite première borne de sortie (O1), ledit deuxième interrupteur redresseur commandé au silicium étant couplé entre ladite première entrée continue (14) et ladite seconde borne de sortie (O2), ledit troisième interrupteur redresseur commandé au silicium étant couplé entre ledit premier noeud (15) et ladite seconde borne de sortie (O2), et ledit quatrième interrupteur redresseur commandé au silicium (S4) étant couplé entre ledit premier noeud (15) et ladite première borne de sortie (O1).

3. Onduleur selon la revendication 2, **caractérisé en ce que** ladite première portion dudit montage en pont comprend ledit premier interrupteur redresseur commandé au silicium (S1) et ledit troisième interrupteur redresseur commandé au silicium (S3), et ladite seconde portion dudit montage en pont (3) comprend ledit deuxième interrupteur redresseur commandé au silicium (S2) et ledit quatrième interrupteur redresseur commandé au silicium (S4).

4. Onduleur selon la revendication 3, **caractérisé en ce que** l'anode dudit premier interrupteur redresseur commandé au silicium (S1) et l'anode dudit deuxième interrupteur redresseur commandé au silicium sont chacune connectées à ladite première entrée continue (14), l'anode dudit troisième commutateur redresseur commandé au silicium est connectée à ladite seconde borne de sortie (O2), et l'anode dudit quatrième interrupteur redresseur commandé au silicium est connectée à ladite première borne de sortie (O1).

5. Onduleur selon la revendication 3 ou 4, **caractérisé en ce que** chacun desdits premier, deuxième, troisième et quatrième interrupteurs redresseurs commandés au silicium (S1, S2, S3, S4) est connecté en parallèle avec une diode (D1, D2, D3, D4) de telle sorte que l'anode de la diode est connectée à la cathode du redresseur commandé au silicium, et la cathode de la diode est connectée à l'anode du redresseur commandé au silicium.

6. Onduleur selon la revendication 3, **caractérisé en ce que** ladite première borne de sortie (O1) est couplée audit premier interrupteur redresseur commandé au silicium (S1) et audit quatrième interrupteur redresseur commandé au silicium (S4) par une première inductance (L1), et ladite seconde borne de sortie (O2) est couplée audit second interrupteur redresseur commandé au silicium (S2) et audit troisième interrupteur redresseur commandé au silicium (S3) par une seconde inductance (L2).

7. Onduleur selon la revendication 6, **caractérisé en ce qu'**un condensateur (C7) est couplé entre ladite première borne de sortie (O1) et ladite seconde borne de sortie (O2).

8. Onduleur selon la revendication 3, **caractérisé en ce que** chacun dudit premier circuit de commande d'impulsions et dudit second circuit de commande d'impulsions (2) comprend un transformateur (T1, T2) ayant un enroulement primaire avec des première et seconde bornes, un premier enroulement secondaire avec des première et seconde bornes et un second enroulement secondaire avec des première et seconde bornes de telle sorte que :
la première borne dudit enroulement primaire est connectée à un premier signal de référence, la seconde borne dudit enroulement primaire est couplée par un circuit de commutation (Q1, C5, R5, Q2, C6, R6) à un second signal de référence, ledit circuit de commutation réagissant à un signal d'impulsions (I1, I2) pour produire une impulsion d'une première polarité sur ledit enroulement primaire ;
la première borne dudit premier enroulement secondaire est connectée par une première diode (D5, D7) à une première borne d'un premier condensateur (C1, C2) et une première borne d'une première résistance (R1, R2) et la seconde borne dudit premier enroulement secondaire est connectée à une seconde borne dudit premier condensateur (C1, C2) et une seconde borne de ladite première résistance (R1, R2) de telle sorte qu'une impulsion de sortie (U1, U2) est produite entre la première borne et la seconde borne de ladite première résistance (R1, R2) en réponse à ladite impulsion sur ledit enroulement primaire ; et
la première borne dudit second enroulement secondaire est connectée par une seconde diode (D6, D8) à une première borne d'un second condensateur (C3, C4), et une première borne d'une seconde résistance (R3, R4) et la seconde borne dudit second enroulement secondaire est connectée à une seconde borne dudit second condensateur (C3, C4) et une seconde borne de ladite seconde résistance (R3, R4) de telle sorte qu'une impulsion de sortie (U3, U4) est générée entre la première borne et la seconde borne de ladite seconde résistance (R3, R4) en réponse à ladite impulsion sur ledit enroulement primaire.

9. Onduleur selon la revendication 8, **caractérisé en ce que** ladite première diode (D5, D7) et ladite seconde diode (D6, D8) sont configurées pour isoler ledit premier enroulement secondaire dudit premier condensateur (C1, C2) et de ladite première résistance (R1, R2) et pour isoler ledit second enroulement secondaire dudit second condensateur (C3, C4) et de ladite seconde résistance (R3, R4) lorsque ladite impulsion sur ledit enroulement primaire n'est pas de ladite première polarité.

10. Onduleur selon la revendication 3, **caractérisé en ce que** ledit circuit de commutation de puissance (5) comprend un transistor de puissance (S5), le drain dudit transistor de puissance (S5) étant connecté audit montage en pont (3), la source dudit transistor de puissance (S5) étant connectée à ladite seconde entrée continue (16), et la porte dudit transistor (S5) étant couplée audit signal d'impulsions de cycle intermittent (I3).

11. Onduleur selon la revendication 3, **caractérisé en ce que** ledit circuit de commutation de puissance (5) comprend :
(a) un premier transistor de puissance (S5), le drain dudit premier transistor de puissance (S5) étant connecté audit montage en pont (3), et la porte dudit premier transistor de puissance (S5) étant couplée par une première résistance (R7) audit signal d'impulsions de cycle intermittent (I3) ;
(b) un deuxième transistor de puissance (S6), la porte dudit deuxième transistor de puissance (S6) étant couplée audit signal d'impulsions de cycle intermittent (I3), et la source dudit deuxième transistor de puissance (S6) étant couplée à la source dudit premier transistor de puissance (S5) ;
(c) un troisième transistor (Q3) ;
(d) une deuxième résistance (R8) couplée entre la source dudit premier transistor de puissance (S5) et la base dudit troisième transistor (Q3) ;
(e) une troisième résistance (R9) couplée entre la source dudit deuxième transistor de puissance (S6) et la seconde entrée continue (16) pour détecter la grandeur du courant entre ladite première borne de sortie (O1) et ladite seconde borne de sortie (O2) ; et
(f) une quatrième résistance (R10) couplée entre le drain dudit premier transistor de puissance (S5) et le drain dudit deuxième transistor de puissance (S6) pour limiter la grandeur dudit courant entre ladite première borne de sortie (O1) et ladite seconde borne de sortie (O2) lorsque ladite grandeur dépasse une valeur de seuil.

12. Onduleur selon la revendication 10 ou 11, **caractérisé en ce que** ladite seconde entrée continue (16) se situe à un niveau de tension plus bas que ladite première entrée continue (14).
